Europäisches Patentamt

European Patent Office

Office européen des brevets

(19)

(11) **EP 0 516 723 B1**

(12) **EUROPEAN PATENT SPECIFICATION**

(45) Date of publication and mention
of the grant of the patent:
**06.08.1997 Bulletin 1997/32**

(21) Application number: **91905233.2**

(22) Date of filing: **21.02.1991**

(51) Int Cl.⁶: **H04B 5/02**, H03L 7/06,
G06K 7/10, H04B 1/59

(86) International application number:
**PCT/SE91/00131**

(87) International publication number:
**WO 91/13499 (05.09.1991 Gazette 1991/21)**

(54) **A RECEIVER AND TRANSMITTER ARRANGEMENT INTENDED FOR AN ELECTRONIC PRICE INFORMATION SYSTEM**

EMPFÄNGER- UND SENDEREINRICHTUNG FÜR EIN ELEKTRONISCHES PREISINFORMATIONSSYSTEM

AGENCEMENT DE RECEPTEUR ET EMETTEUR DESTINE A UN SYSTEME ELECTRONIQUE D'INFORMATION DE PRIX

(84) Designated Contracting States:
**DE FR GB**

(30) Priority: **23.02.1990 SE 9000651**

(43) Date of publication of application:
**09.12.1992 Bulletin 1992/50**

(73) Proprietor: **BRÄNNSTRÖM, Roland**
**S-416 67 Göteborg (SE)**

(72) Inventor: **BRÄNNSTRÖM, Roland**
**S-416 67 Göteborg (SE)**

(74) Representative: **Onn, Thorsten et al**
**AB STOCKHOLMS PATENTBYRA**
**Box 23101**
**104 35 Stockholm (SE)**

(56) References cited:
EP-A- 0 337 283          SE-B- 441 477
US-A- 4 002 886          US-A- 4 521 677

**Description**

The present invention relates generally to a receiver and transmitter arrangement price information system which system includes a plurality of price information units for displaying changeables information, a control computer unit to which information is supplied and which communicates with a communication unit connected thereto, wherein two-directional communication between the communication unit and the price information units is effected with cordless inductive coupling, said receiver and transmitter arrangement being included in a price information unit.

Electronic price information systems for displaying the price, article number and like changeable information on the edges of shelves or like places in stores, shops and goods-storage locations are known to the art.

SE-441 477 teaches a computer-controlled electronic price information system which includes a plurality of displays arranged on shelves, such as to display the information desired, for instance the price,.article number and like information relating to the goods on show. The information shown on the display unit is changed by transmitting the changed information from a control unit to a receiver in the display unit, over a cordless connection, either a radio connection or an IR-connection. Communication in this system takes place solely from the control unit to the receiver, i.e. unidirectional communication.

US-4,521,677 teaches a computer-controlled electronic shelf marking system which includes a plurality of shelf displays for presenting changeable alphanumerical information. Changes are effected to the information presented by the display unit, by transmitting changed information from a computer-connected transmitter to a receiver connected to the shelf display, over a cordless connection.

EP-A2-0 337 283, which discloses the features of the preamble of claim 1, teaches a goods marking arrangement which includes an output device placed on a particular goods item in order to show the price of said item, for instance. The transmission of information between the output devices and a central transmitter is effected in a cordless fashion, for instance with the aid of inductive or capactive coupling means. The receivers provided in the transmitter and the output device can be tuned to a variable receiver frequency, so that an article or item in a particular division or display compartment or of a particular type of goods can be called by frequency selection.

One problem with the earlier known electronic price information systems is that the signal/noise ratio can differ very considerably between transmission and reception of signals, which limits the information that can be transmitted from the price information units to the control unit. The signal/noise ratio between transmission in respective corrections can often vary by a factor of at least 500 times. As a result, the information transmitted from the price information unit to the control unit will often solely comprise one single response signal, often of long duration and which is filtered in a narrow filter in the control unit. Another problem is that the frequency between the oscillators in the control unit and the price information units will deviate unless relatively expensive crystals are used for the oscillators in the control unit and the price information units respectively. The total cost of the price information system is influenced quite considerably by the price of the crystals used, since one crystal is required for each price information unit included in the system and the number of price information units in the system may often be very large. It is therefore desirable to use the cheapest crystals possible.

These drawbacks are eliminated with the inventive receiver and transmitter arrangement having the characteristic features set forth in the characterizing clause of Claim 1. By controlling the voltage-controlled oscillator in the receiver and transmitter arrangement in a manner such that both the frequency and phase-position of the oscillator in the communication unit and the controllable oscillator in the price information units coincide, it is possible to use signals of longer duration and filters of narrower bandwidth. Furthermore, it is possible to transmit signals in a relatively complicated pattern while retaining the signal/noise ratio. This feature can also be utilized to reduce the effect of constant frequency disturbance sources.

The invention will now be described in more detail with reference to an exemplifying embodiment thereof illustrated in the accompanying drawings, in which

Figure 1 is a simplified block schematic of a price information system in which the present invention can be used; and

Figure 2 is a circuit diagram of one embodiment of the inventive receiver and transmitter arrangement.

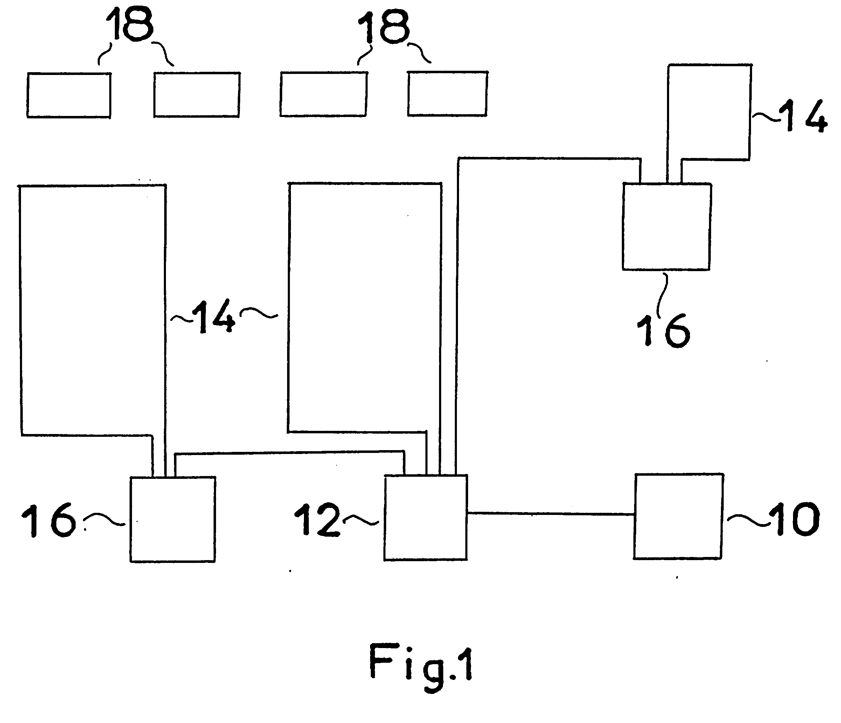

The inventive price information system illustrated in Figure 1 is intended for use in a store, shop or storage location for instance, and includes a control computer unit 10, which may have the form of a personal computer or the like, for instance. The control computer unit 10 is connected to a communication unit 12, which is connected constantly to an inductively coupled loop-pair 14 installed in the shop or storage location.

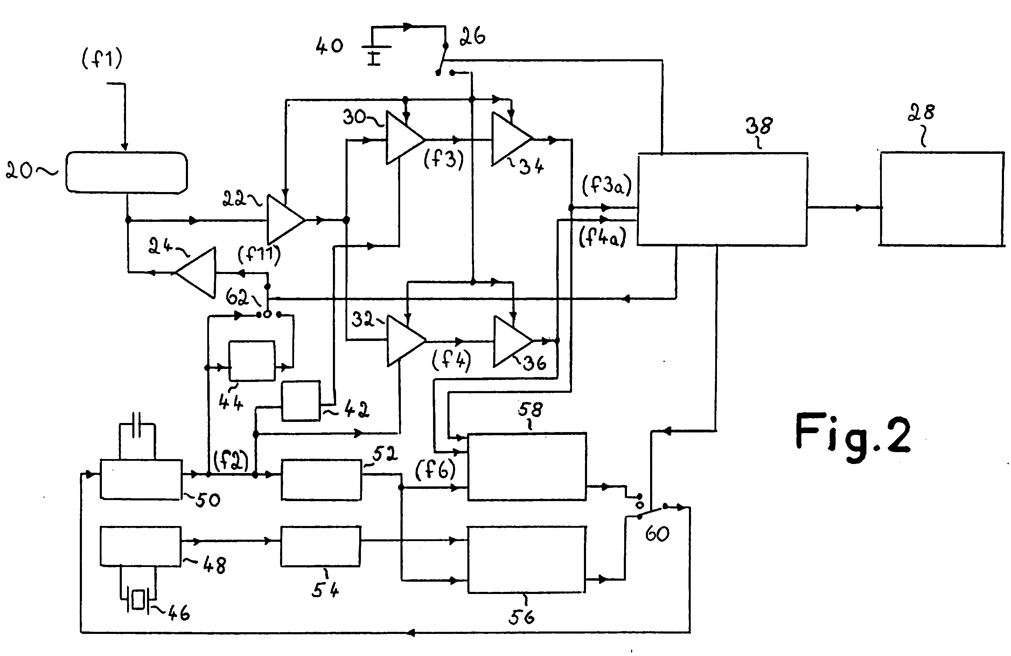

Disposed in the shop or storage location is a plurality of price information units 18 which are placed, for instance, on the shelves adjacent those items of goods about which information is to be displayed. Each of the price information units 18 includes a display unit 28 (see Figure 2) which displays, for instance, the price of the goods concerned and/or other information. Communication between the communication unit 12 and the price information units 18 is effected in a cordless fashion, by inductive coupling. When transmitting to the price information unit 18, the communication unit 12 drives a sinusoidal current through one loop pair 14. A magnetic field proportional to the current is then generated in space (Biot-Savart's law). By changing the frequency of the sinusoidal shape, two states are produced, so-called frequency modulation, therewith enabling binary coded information to be transmitted. The "0"-state can correspond, for instance, to the frequency 48.96-0.64 kHz and the "1"-state can correspond, for instance, to the frequency 40.96+0.64 kHz. Each price information unit 18 includes a loop in which there occurs a voltage which is proportional to the derivative of the magnetic field (Faraday's induction law). Each price information unit is also provided with two sampled filters which are responsive to the aforesaid frequencies. The information corresponding to the two states is recreated in this way.

If the shop or storage location is so large that the range of the communication unit 12 is insufficient for the purpose intended, one or more slave units 16 may be connected to the communication unit 12. Each slave unit 16 is equipped with two loop-pairs. When information is transmitted, all slave units 16 and the communication unit 12 transmit in parallel, i.e. currents of mutually the same size and mutually the same rotational direction are generated in all connected loop pairs 14 simultaneously.

Figure 2 is a circuit diagram of a receiver and transmitter arrangement constructed in accordance with the invention. The illustrated receiver and transmitter arrangement is intended to be included in a price information unit. The receiver and transmitter arrangement includeds a loop 20 which is intended to receive information from the communication unit and to transmit information to said communication unit. At those times when there is no communication with the price information unit, a switch 26 is switched to the illustrated position, in which no power is supplied from a power source 40 to a number of circuits, namely two filter and demodulator circuits 30, 32 of the so-called switched capacitor type, an amplifier 22 connected between the loop 1 and the two filter and demodulator circuits 30, 32, and two comparators 34, 36. When information is transmitted from the control unit to the price information unit, an activating message is received by a digital network 38, which in response thereto activates the switch 26 and causes said switch to take its other position, in which power is supplied continuously to the amplifier 22, the filter and demodulator circuits 30 and 32 and the comparators 34, 36. The resonance frequency of the filter and demodulator circuits 30 and 32 is controlled by a voltage-controlled oscillator 50, which is in turn controlled by an incorporated crystal 46 via a so-called phase-locked loop 52, 54 and 56, when a switch 60 is in the position shown in Figure 2. The phase-locked loop includes two frequency dividing circuits 52 and 54 and a phase comparator 56 of the edge-triggered type. This configuration is quite usual in modern receivers, since it requires only one crystal for receiving on different frequencies and since adjustment of the received frequency can be achieved readily by changing the frequency dividing circuits 52 and 54. When information is transmitted to the price information unit, the voltage-controlled oscillator 50 is steered by the information received, so that both frequency and phase position of the oscillators in the control unit and the price information unit will coincide. When information is transmitted to the price information unit, the digital network 38 functions to steer the switch 60 to the position in which a second phase comparator 58 is connected to the voltage-controlled oscillator 50. The phase comparator 58 receives input signals from the frequency dividing circuit 52 and from the two comparators 34 and 36. The receiver and transmitter arrangement also includes a phase shift circuit 42 [-90°] which is connected to the filter and demodulator circuit 30. The illustrated receiver and transmitter arrangement can be operated in the transmission mode, wherein a switch 62 is in either one of two positions.

Assume that the control unit produces the output signal sine (Wref ± Wmod) t. This signal is designated (fl) and is received by the loop 1 in the price information unit. This change in the frequency of the sinusoidal signal produces two states, so-called frequency modulation, therewith enabling coded information to be transmitted. The state "1" can correspond, for instance, to the frequency Wref + Wmod whereas the state "0" can correspond, for instance, to the frequency Wref - Wmod. Further assume that the phase angle of the output signal of the control unit is 0 at t=0. Also assume that the voltage-controlled oscillator 50 of the price information unit generates the signal sine (Wot + Vo), where Vo is the phase angle at t=0. This signal is designated (f2) and is transmitted directly to the filter and demodulator circuit 32 or to the filter and demodulator circuit 30, or is transmitted thereto via the phase shift circuit 42. The signal (f1) received on the loop 20 is transmitted to the two filter and demodulator circuits 30 and 32 via the amplifier 22. The output signal (f3) from the filter and demodulator circuit 30 can thus be described as the function

$$\sin (Wref \pm Wmod)\ t \cdot \sin (Wot + Vo)$$

and the output signal (f4) from the filter and demodulator circuit 32 can be described by the function

$$\sin (Wref \pm Wmod)\ t \cdot \sin \left(Wot + Vo + \frac{\pi}{2}\right)$$

The function (f3) can be described in another way

$$\tfrac{1}{2} \sin((W_{ref} \pm W_{mod} - W_o)t + V_o - \tfrac{3\pi}{2}) + \tfrac{1}{2}\sin((W_{ref} \pm W_{mod})$$

$$t + ...)$$

where the last term can be ignored, since a signal of such high frequency is effectively filtered out by the filter. The output signals (f3) and (f4) are amplified by the comparators 34 and 36, wherein the signals (f3a) and (f4a) received from these comparators constitute control value signals, or desired value signals, which are transmitted to the phase comparator 58. Subsequent to being divided by $W_{ref}/W_{mod}$ (frequency dividing circuit 52) and by the phase position V, i.e. $\tfrac{1}{2}\sin(W_o(W_{mod}/W_{ref})t + V)$ the signal (f2) is transmitted to the phase comparator 58 as a real value signal. This signal is designated (f6). The output signal from the phase comparator 58 controls the voltage-controlled oscillator 50 in response to the input signals [(f6), (f3a), (f4a)], such that the following relationship will apply

$$\tfrac{1}{2}\sin((W_{ref} \pm W_{mod} - W_o)t + V_o - \tfrac{3\pi}{2}) = \tfrac{1}{2}\sin$$

$$(W_o(W_{mod}/W_{ref})t + V)$$

The equation for the high frequency is calculated first

$$W_{ref} + W_{mod} - W_o = W_o(W_{mod}/W_{ref}) \text{ and } V_o - \tfrac{3\pi}{2} = V \text{ i.e. } W_o = W_{ref} \text{ and } V_o = V + \tfrac{3\pi}{2} \qquad (1)$$

The phase position, however, cannot be related to the oscillator of the control unit with the aid of one frequency. The phase position obtained is dependent on the oscillator frequency.
The following relationship applies in the case of the low frequency

$$W_{ref} - W_{mod} - W_o = -W_o(W_{mod}/W_{ref} \text{ and } V_o - \tfrac{3\pi}{2} = \pi - V \text{ i.e. } W_o = W_{ref} \text{ and } V_o = \tfrac{5\pi}{2} - V \qquad (2)$$

If the phase position shall remain unchanged in the frequency change-over, there is obtained with relationships (1) and (2)

$$V = \tfrac{\pi}{2}$$

Naturally, one condition for this is that each package of high and low frequency respectively has a length equal to $n.2\pi/W_{mod}$, i.e. the package includes $W_{ref}/W_{mod} \pm n$ cycles. If a more general efforts is made, with view to the fact that the function is periodic, the solution $V = \tfrac{\pi}{2} \pm m\pi$ will be obtained.
Each of the signals according to (f3) and (f4) is an input signal to a respective comparator 34 and 36. The output signals from the comparator (f3a) and f4a) behave in the following manner.

```
(f3a)      ___!‾‾‾!___!‾‾‾!___!‾‾‾!___!‾‾‾!___!‾‾‾!___!‾‾‾!___!‾‾‾!___
```

```
(f4a)      !‾‾‾!___!‾‾‾‾‾‾‾!___!‾‾‾!___!‾‾‾‾‾‾‾!___!‾‾‾!___
```

```
(f1)     LLLLLLLLLL    HHHHHHHHHHHHHHHH    LLLLLLLLLLLLL
```

The signs "LL." and "HH." designate periods of low and high frequency respectively. It might be more convenient, however, to lock the phase at another phase position:

**(f3a)**

**(f4a)**

(f1)     LLLLLLLLLL    HHHHHHHHHHHHHHH    LLLLLLLLLLLLL

This results in a 90° phase shift of both (f3) and (f4), which reduces the extent to which the signals are blocked in the bandpass filters 30 and 32.

The time lapse between the positive flanks of the control value signals [(f3a), (f4a)] and the real value signal (f6) controls the voltage-controlled oscillator 50 subsequent to receipt of the alarm message, i.e. when communication commences. The voltage-controlled oscillator 50 is controlled in a normal manner over those times periods in which no communication takes place, i.e. is controlled by the crystal 46 incorporated in the price information unit, via the phase-locked loop 52, 54 and 56.

Internal frequency (f6)

**(f3a)**

**(f4a)**

## Output signal to VCO

The frequency of the voltage-controlled oscillator 50 is changed between the markings "f". This change is proportional to the time between the edges. It is also important that the relationship Wref-Wmod <Wo<Wref + Wmod applies during the whole of this period, otherwise Wo would be changed in the "wrong direction".

When the price information unit transmits to the control unit, the output signal is modulated with the change-over switch 62.

This modulation may conceivably be effected in the following manner:

(f11)     ++++----++++----++++----++++----++++----

"+"   designates a transmitted signal of frequency Wo and phase position 0°.
"-"   designates a transmitted signal of frequency Wo and phase position 180°.

The following is obtained at the interface between 0 and -180°:

(f11)

(f11)     ++++++++++++   ----------------.

The embodiment of the invention described above is only one example of how the invention can be realized and does not therefore limit the scope of the invention, the true scope of which is defined in the following Claims.

**Claims**

1.  A receiver and transmitter arrangement for a price information system which system includes a plurality of price information units (18) for displaying changeable information, a control computer unit (10) to which information is supplied and which communicates with a communication unit (12) connected thereto, wherein two-directional communication between the communication unit (12) and the price information units (18) is effected with cordless inductive coupling, said receiver and transmitter arrangement being included in a price information unit (18) and being characterized in that it includes a voltage-controlled oscillator (50) which controls the resonance frequencies of two filter and demodulator circuits (30, 32) included in the arrangement, a crystal oscillator (46) for controlling the voltage-controlled oscillator (50) with the aid of a phase locked loop (52, 54, 56), and in that it further includes a switch (60) which is controlled by a digital network (38) included in said arrangement and which switch (60) occupies a first position when no information is transmitted from the communication unit (12) to the price information unit (18), the voltage-controlled oscillator (50) then being controlled by the crystal oscillator (46) and the phase locked loop (52, 54, 56) and a second position when information is transmitted from the communication unit (12) to the price information unit (18), the voltage-controlled oscillator (50) then being controlled by a phase comparator (58) included in said arrangement such that frequency and phase position of the oscillator in the communication unit (12) and the controllable oscillator (50) in said arrangement coincide.

2.  An arrangement according to Claim 1, **characterized** in that the two filters in the filter and demodulator circuit (30, 32) are so-called switched capacitor filters, wherein the circuits function both as filters and demodulators and both of which are supplied with a signal which has been amplified in an amplifier (22) and which has been received in a cordless fashion by a receiver/transmitter device (20) included in the arrangement.

3.  An arrangement according to Claim 1 or 2, **characterized** in that the arrangement includes two comparators (34, 36) each of which is connected to the output of a respective filter and demodulator circuit (30, 32) for providing two control value signals (f3a, f4a) which are delivered to the phase comparator (58) for the purpose of controlling the voltage-controlled oscillator (50) when information is transmitted to said arrangement.

4.  An arrangement according to Claims 1-3, **characterized** in that the real value signal delivered to the phase comparator (58) is an output signal (f2) from the voltage-controlled oscillator (50) which is transmitted to the phase comparator (58) via a frequency dividing circuit (52).

5.  An arrangement according to- Claims 1-4, **characterized** in that the amplifier (22), the two filter and demodulator circuits (30, 32) and the comparators (34, 36) are either powered continuously by a power source (40) via a witch (26) when communication takes place or intermittently.

6. An arrangement according to Claims 1-5, **characterized** in that the digital network (38) receives the two output signals (f3a, f4a) from the comparators (34, 36) for steering or controlling the two switches (60, 26), and a switch (62) having n positions, wherein the switch is switched to a first position when the arrangement functions as a receiver and to the n-1 other positions when the arrangement functions as a phase modulating transmitter.

7. An arrangement according to Claims 1-6, **characterized** in that the phase-locked loop (52, 54, 56) includes the frequency dividing circuit (52) connected to the output of the voltage-controlled oscillator (50) a frequency dividing circuit (54) connected to the output of the crystal oscillator (46), and a phase comparator (56) of the flank-triggered type the inputs of which are connected to the outputs of the two frequency dividing circuits (52, 54) and the output of which is connected to the input of the voltage-controlled oscillator (50).

8. An arrangement according to Claims 1-7, **characterized** in that it comprises a phase shifting circuit (42) which is connected between the output of the voltage-controlled oscillator (50) and an input of one of the filter and demodulator circuits (30), such that the signal (f3) obtained from said one of the filter and demodulator circuits (30) is phase shifted so as to obtain a phase difference of 90° between the signals (f3,f4) obtained from the filter and demodulator circuits (30,32).

**Patentansprüche**

1. Empfänger- und Senderanordnung für ein Preisinformationssystem, wobei dieses System eine Vielzahl von Preisinformationseinheiten (18) zum Anzeigen von veränderbarer Information, eine Steuercomputereinheit (10), an die Information geliefert wird und die mit einer damit verbundenen Kommunikationseinheit (12) kommuniziert, umfaßt, wobei eine zweidirektionale Kommunikation zwischen der Kommunikationseinheit (12) und den Preisinformationseinheiten (18) mit einer kabellosen induktiven Kopplung bewirkt wird, wobei die Empfänger- und Senderanordnung in einer Preisinformationseinheit (18) enthalten ist und **dadurch gekennzeichnet ist,** daß sie umfaßt einen spannungsgesteuerten Oszillator (50), der die Resonanzfrequenzen von zwei in der Anordnung enthaltenen Filter- und Demodulatorschaltungen (30, 32) steuert, einen Kristalloszillator (46) zum Steuern des spannungsgesteuerten Oszillators (50) mit der Hilfe einer phasenstarren Regelschleife (52, 54, 56), und daß sie ferner umfaßt einen Schalter (60), der von einem in der Anordnung enthaltenen Digitalnetz (38) gesteuert wird, und wobei der Schalter (60) eine erste Position belegt, wenn keine Information von der Kommunikationseinheit (12) an die Preisinformationseinheit (18) gesendet wird, wobei der spannungsgesteuerte Oszillator (50) dann durch den Kristalloszillator (46) und die phasenstarre Regelschleife (52, 54, 56) gesteuert wird, und eine zweite Position, wenn Information von der Kommunikationseinheit (12) an die Preisinformationseinheit (18) gesendet wird, wobei der spannungsgesteuerte Oszillator (50) dann von einem in der Anordnung enthaltenen Phasenkomparator so gesteuert wird, daß die Frequenz- und Phasenposition des Oszillators in der Kommunikationseinheit (12) und des steuerbaren Oszillators (50) in der Anordnung übereinstimmen.

2. Anordnung nach Anspruch 1,
   **dadurch gekennzeichnet, daß** die zwei Filter in der Filter- und Demodulatorschaltung (30, 32) sogenannte Schalter-Kondensator-Filter sind, wobei die Schaltungen sowohl als Filter als auch Demodulatoren arbeiten und wobei an beide ein Signal geführt wird, welches in einem Verstärker (22) verstärkt worden ist und welches in einer kabellosen Weise von einer in der Anordnung enthaltenen Empfänger/Sender-Einrichtung (20) empfangen worden ist.

3. Anordnung nach Anspruch 1 oder 2,
   **dadurch gekennzeichnet, daß** die Anordnung zwei Komparatoren (34, 36) umfaßt, wobei jeder von diesen mit dem Ausgang einer jeweiligen Filter- und Demodulatorschaltung (30, 32) verbunden ist, zum Bereitstellen von zwei Steuerwertsignalen (f3a, f4a), die an den Phasenkomparator (58) für den Zweck einer Steuerung des spannungsgesteuerten Oszillators (50) geliefert werden, wenn Information an die Anordnung gesendet wird.

4. Anordnung nach den Ansprüchen 1 bis 3,
   **dadurch gekennzeichnet, daß** das Realwertsignal, welches an den Phasenkomparator (58) geliefert wird, ein Ausgangssignal (f2) von dem spannungsgesteuerten Oszillator (50) ist, welches an den Phasenkomparator (58) über eine Frequenzteilerschaltung (52) gesendet wird.

5. Anordnung nach den Ansprüchen 1 bis 4,
   **dadurch gekennzeichnet, daß** der Verstärker (22), die zwei Filter- und Demodulatorschaltungen (30, 32) und die Komparatoren (34, 36) entweder fortwährend durch eine Energiequelle (40) über einen Schalter (26), wenn eine Kommunikation stattfindet, oder intermittierend mit Energie versorgt werden,.

6. Anordnung nach den Ansprüchen 1 bis 5,
   **dadurch gekennzeichnet, daß** das Digitalnetz (38) die zwei Ausgangssignale (f3a, f4a) von den Komparatoren zum Leiten oder Steuern der zwei Schalter (60, 26) und einen Schalter (62) mit n-Positionen, wobei der Schalter auf eine erste Position geschaltet wird, wenn die Anordnung als ein Empfänger arbeitet, und auf die n-1 anderen Positionen, wenn die Anordnung als ein phasenmodulierender Sender arbeitet, empfängt.

7. Anordnung nach den Ansprüchen 1 bis 6,
   **dadurch gekennzeichnet, daß** die phasenstarre Regelschleife (52, 54, 56) die Frequenzteilerschaltung (52), die mit dem Ausgang des spannungsgesteuerten Oszillators (50) verbunden ist, eine Frequenzteilerschaltung (54), die mit dem Ausgang des Kristalloszillators (46) verbunden ist, und einen Phasenkomparator (56) des flankengetriggerten Typs, dessen Eingänge mit den Ausgängen der zwei Frequenzteilerschaltungen (52, 54) verbunden sind und dessen Ausgang mit dem Eingang des spannungsgesteuerten Oszillators (50) verbunden ist, umfaßt.

8. Anordnung nach den Ansprüchen 1 bis 7,
   **dadurch gekennzeichnet, daß** sie eine
   Phasenschieberschaltung (42), die zwischen den Ausgang des spannungsgesteuerten Oszillators (50) und einen Eingang von einer der Filter- und Demodulatorschaltungen (30) geschaltet ist, so daß das Signal (f3), welches von der einen Filter- und Demodulatorschaltung (30) erhalten wird, in der Phase verschoben wird, um so eine Phasendifferenz von 90° zwischen den Signalen (f3, f4), die aus den Filter- und Demodulatorschaltungen (30, 32) erhalten werden, zu erhalten.

## Revendications

1. Ensemble récepteur et émetteur d'un système d'information sur les prix, ce système comprenant plusieurs unités (18) d'information sur les prix destinées à afficher des informations qui peuvent être changées, une unité (10) à ordinateur de commande à laquelle des informations sont transmises et qui communique avec une unité de communication (12) qui lui est connectée, dans lequel la communication bidirectionnelle entre l'unité de communication (12) et les unités (18) d'information sur les prix est réalisée par un couplage inductif sans fil, l'ensemble émetteur et récepteur étant incorporé à une unité (18) d'information sur les prix, caractérisé en ce qu'il comprend un oscillateur commandé en tension (50) qui règle les fréquences de résonance de deux circuits démodulateurs à filtre (30, 32) incorporés à l'ensemble, un oscillateur piézoélectrique (46) destiné à commander l'oscillateur commandé en tension (50) à l'aide d'une boucle à verrouillage de phase (52, 54, 56), et en ce qu'il comporte en outre un commutateur (60) commandé par un réseau numérique (38) incorporé à l'ensemble, le commutateur (60) occupant une première position lorsqu'aucune information n'est transmise de l'unité de communication (12) à l'unité (18) d'information sur les prix, l'oscillateur commandé en tension (50) étant alors commandé par l'oscillateur piézoélectrique (46) et cette boucle à verrouillage de phase (52, 54, 56), et une seconde position lorsqu'une information est transmise de l'unité de communication (12) à l'unité (18) d'information sur les prix, l'oscillateur commandé en tension (50) étant alors commandé par un comparateur (58) de déphasage incorporé à l'ensemble de manière que la fréquence et la position en phase de l'oscillateur dans l'unité de communication (12) et de l'oscillateur qui peut être commandé (50) dans l'ensemble coïncident.

2. Ensemble selon la revendication 1, caractérisé en ce que les deux filtres des circuits démodulateurs à filtre (30, 32) sont des filtres dits à "condensateur commuté", dans lequel les circuits fonctionnent à la fois comme filtre et démodulateur et qui sont tous deux alimentés par un signal qui a été amplifié dans un amplificateur (22) et qui a été reçu sans fil par un dispositif récepteur-émetteur (20) incorporé à l'ensemble.

3. Ensemble selon la revendication 1 ou 2, caractérisé en ce que l'ensemble comprend deux comparateurs (34, 36), chacun d'eux étant connecté à la sortie d'un circuit démodulateur à filtre (30, 32) destiné à donner deux signaux (f3a, f4a) de valeur de commande qui sont transmis au comparateur de déphasage (58) pour la commande de l'oscillateur commandé en tension (50) lorsque l'information est transmise à l'ensemble.

4. Ensemble selon les revendications 1 à 3, caractérisé en ce que le signal de valeur réelle transmis au comparateur de déphasage (58) est un signal de sortie (f2) de l'oscillateur commandé en tension (50) qui est transmis au comparateur de déphasage (58) par l'intermédiaire d'un circuit diviseur de fréquence (52).

**5.** Ensemble selon les revendications 1 à 4, caractérisé en ce que l'amplificateur (22), les deux circuits démodulateurs à filtre (30, 32) et les comparateurs (34, 36) sont alimentés soit de façon continue par une alimentation (40) par l'intermédiaire d'un commutateur (26) lorsque la communication a lieu, soit par intermittence.

**6.** Ensemble selon les revendications 1 à 5, caractérisé en ce que le réseau numérique (38) reçoit les signaux de sortie (f3a, f4a) des comparateurs (34, 36) pour la direction ou la commande des deux commutateurs (60, 26), et il comporte un commutateur (62) ayant n positions, et le commutateur est commuté à une première position lorsque l'ensemble fonctionne comme récepteur et à n-1 autres positions lorsque l'ensemble fonctionne comme émetteur à modulation de phase.

**7.** Ensemble selon les revendications 1 à 6, caractérisé en ce que la boucle (52, 54, 56) à verrouillage de phase comprend le circuit diviseur de fréquence (52) connecté à la sortie de l'oscillateur commandé en tension (50), un circuit diviseur de fréquence (54) connecté à la sortie de l'oscillateur piézoélectrique (46), et un comparateur de déphasage (56) du type déclenché par un flanc et dont les entrées sont connectées aux sorties des deux circuits diviseurs de fréquence (52, 54) et la sortie est connectée à l'entrée de l'oscillateur commandé en tension (50).

**8.** Ensemble selon les revendications 1 à 7, caractérisé en ce qu'il comprend un circuit de déphasage (42) qui est connecté entre la sortie de l'oscillateur commandé en tension (50) et une entrée des circuits démodulateurs à filtre (30), afin que le signal (f3) obtenu de l'un des circuits démodulateurs à filtre (30) subisse un déphasage destiné à donner une différence de phase de 90° entre les signaux (f3, f4) obtenus à partir des circuits démodulateurs à filtre (30, 32).

Fig.1

EP 0 516 723 B1

Fig.2